(19) Europäisches Patentamt
European Patent Office
Office européen des brevets

(11) **EP 2 746 793 A1**

(12) **EUROPEAN PATENT APPLICATION**

(43) Date of publication:
**25.06.2014  Bulletin 2014/26**

(51) Int Cl.:
***G01R 31/26*** (2014.01)    ***F21S 8/00*** (2006.01)

(21) Application number: **12198919.8**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventors:
• **Wunnicke, Olaf**
  **Redhill, Surrey RH1 1NY (GB)**
• **Reimann, Klaus**
  **Redhill, Surrey RH1 1NY (GB)**

• **Doorn, Tobias**
  **Redhill, Surrey RH1 1NY (GB)**
• **Surdeanu, Radu**
  **Redhill, Surrey RH1 1NY (GB)**
• **Bergveld, Hendrik**
  **Redhill, Surrey RH1 1NY (GB)**

(74) Representative: **Hardingham, Christopher Mark**
**NXP B.V.**
**Intellectual Property & Licensing**
**Red Central**
**60 High Street**
**Redhill, Surrey RH1 1SH (GB)**

(54) **A method and arrangement for characterising a PV cell , and a PV module**

(57)    A method is disclosed for characterising a PV module comprising a PV cell having a thermal loading thereon, a heat sink, and a thermal connector providing a thermal path between the concentrator PV cell and the heat-sink, the method comprising: producing a transient in the thermal loading; determining a parameter associated with a change of temperature of the PV cell caused by the transient; and determining a parameter indicative of a thermal conductance of the thermal path, based on the parameter associated with a change of temperature of the PV cell. The PV module may be a concentrator PV module.

An arrangement configured to carry out such a method is also disclosed.

Fig. 7

EP 2 746 793 A1

**Description**

Field of the Invention

This invention related to photovoltaic (PV) cells and modules, and in particular to methods of testing or characterising such cells and modules.

Background of the Invention

Concentrator PV modules are photovoltaic modules which are designed to operate under conditions of concentrated solar irradiation. Typically, a concentrator PV module comprises one or more photovoltaic cells, onto which solar illumination is concentrated by an optical system. For cost efficiency, the optical system often comprises mirrors, although lenses may be used in addition or as alternatives. The or each concentrator PV cell converts some of the energy from the concentrated solar irradiation into electrical energy. Typical conversion efficiencies may be of the order of 20 to 40%. The remaining 60 to 80% of the concentrated solar energy is dissipated as heat energy. To accommodate and dissipate this heat energy, the or each concentrator PV cell is thermally connected to a heatsink, by a thermal connector. The thermal connector may be for instance thermal grease, glue or solder. Alternatively, the thermal connection may simply be the rear-side electrical contact pad of the PV cell.

The thermal connector may also provide the function of securing the concentrator PV cell to the heat sink and thus may be for instance an adhesive. Adhesives for use in this type of application are typically loaded with high conductivity metallic particles in order to provide a high thermal conductance.

Concentrator PV cells are normally constructed from semiconductor materials, and their operating efficiency decreases with increasing temperature. Higher temperatures may also decrease the life-time of semiconducting devices. Furthermore, semiconductors may be damaged by high temperature. Other system components, such as the protective glass or plastics which typically covers the PV cells, or the transparent adhesive which typically attaches the glass to the cell, may also be degraded by high temperatures. It is therefore important to operate the cells at as low a temperature as practical.

It is known for instance from Muller et al "Determining outdoor CPV cell temperature", 7th International conference on concentrating PV systems (CPV - 7), AIP conference proceedings volume 1407 pp 1331- 335 (2011), to estimate the cell temperature by means of shuttering the illumination, and using the known electrical characteristics of a CPV cell.

Summary of the invention

According to a first aspect there is provided a method of characterising a PV module comprising a PV cell having a thermal loading thereon, a heat sink, and a thermal connector providing a thermal path between the PV cell and the heat-sink, the method comprising: producing a transient in the thermal loading; determining a parameter associated with a change of temperature of the PV cell caused by the transient; and determining a parameter indicative of a thermal conductance of the thermal path, based on the parameter associated with a change of temperature of the PV cell.

Thus by observing, either during or after a transient is applied to the thermal loading of the PV cell, the effect of the transient on the temperature of the cell, information may be deduced as to the thermal resistance between the cell and the heatsink.

In embodiments the PV module is a concentrator PV module and the PV cell is a concentrator PV cell. Since the PV cells in concentrator PV modules have a relatively high level of solar irradiance, characterising their thermal performance may be particularly beneficial, in particular since they generally operate at higher temperatures than non-concentrator PV cells.

In embodiments the parameter associated with a change of temperature of the PV cell is a change of temperature of the PV cell. In other embodiments the parameter associated with a change of temperature of the PV cell is indicative of the time for the PV cell to reach an equilibrium temperature. As will be discussed in more detail below, the better the thermal contact between the PV cell and the heatsink, the smaller the change in temperature will generally be, and, in addition, the shorter the time will be required until a new equilibrium temperature is reached by the cell.

In embodiments the transient is produced by altering a level of solar irradiance on the PV cell. In other embodiments, the transient is produced by altering the electrical operating conditions of the PV cell. The transient may be produced by injecting current into the PV cell. Since a PV cell converts optical energy into electricity, the remainder being generally wasted as heat, the thermal loading on the cell may be impacted by the change either in its electrical conditions or its optical conditions.

In embodiments a pulse modulation between a relatively high current value and a relatively low current value is used to determine the parameter associated with a change of temperature of the PV cell caused by the transient. In such embodiments, it may not be necessary to use a conventional temperature sensor such as a PTC or a thermocouple.

The pulse modulation may be provided by a switched mode power converter, and in particular a switch mode power converter, wherein the switch mode power converter is further operable to control an operating voltage of the PV cell.

In embodiments in which the transient is caused by injecting a current into the PV, the current may be injected by means of the switch mode power converter, e.g., a DC-DC converter.

According to another aspect there is provided an arrangement for characterising a PV module comprising a PV cell having a thermal loading thereon, a heat sink, and a thermal connector providing a thermal path between the PV cell and the heat-sink, the arrangement comprising: a transient source configured to produce a transient in the thermal loading; a first determining unit configured to determine a parameter associated with a change of temperature of the PV cell caused by the transient; and a second determining unit in communication with the first determining unit and configured to determine a parameter indicative of a thermal conductance of the thermal path, based on the parameter associated with a change of temperature of the PV cell.

The parameter associated with a change of temperature of the PV cell may be a change of temperature of the PV cell, or in other embodiments may be indicative of the time for the PV cell to reach an equilibrium temperature.

The transient source may be operable to at least one of alter a level of solar irradiance on the PV cell, alter the electrical operating conditions of the PV cell, and inject current into the PV cell.

The arrangement may further comprise a switch mode power converter configured to inject the current into the PV cell. The switch mode power converter may be configured to provide a pulse modulation between a relatively high current value and a relatively low current value to determine the parameter associated with a change of temperature of the PV cell caused by the transient.

According to a yet further aspect there is provided a photovoltaic system comprising a PV module and an arrangement as described above.

These and other aspects of the invention will be apparent from, and elucidated with reference to, the embodiments described hereinafter.

Brief description of Drawings

Embodiments of the invention will be described, by way of example only, with reference to the drawings, in which

figure 1 illustrates the current-voltage (IV) characteristic curve of a PV cell;
figure 2 depicts the IV characteristic of a PV cell under various irradiance conditions;
figure 3 shows the variation of the IV characteristic of a solar cell with operating temperature;
figure 4 shows a schematic of a concentrator PV module;
figure 5 is a schematic of the power flow in a concentrator PV cell;
figure 6 shows the change in temperature of a PV cell over time, for four different values of thermal resistance of the thermal path between the PV cell and the heatsink, upon the application of a change to the thermal loading; and figure 7 shows a flow-chart illustrating methods according to embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

Detailed description of embodiments

A photovoltaic cell (PV cell) is a device for converting optical energy into electrical energy. Electrically a PV cell may be modelled as a voltage-independent current source I($\phi$) - also referred to as the irradiation current, where $\phi$ is the irradiance, normally measured in W/m2, in parallel with a diode having a voltage-dependent current characteristic Id such that:

$$I_d(V) = I_o . e^{\frac{q}{nkT} V_d} \qquad (0)$$

So:

$$I = I(\emptyset) - I_d = I(\emptyset) - I_o . e^{\frac{q}{nkT} . V_d} , \qquad (1)$$

where $V_d$ is related to the output voltage V, through the series resistance Rs, such that $V = V_d - I.R_s$.

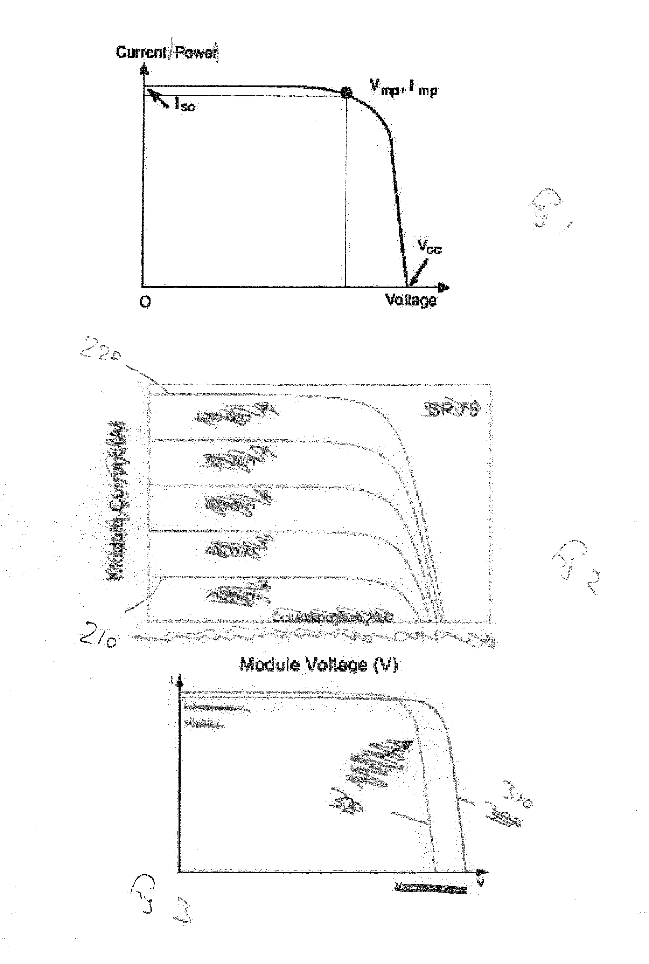

The various terms used to describe the IV characteristic curve of a PV cell are shown in figure 1. The figure shows the IV characteristic of a PV cell in the fourth quadrant of the IV plane (that is, the figure is inverted relative to the conventional view of the IV plane). The current output when the cell is short-circuited (that is, the short-circuit current), is shown at Isc; the voltage output when the cell is disconnected (that is, the open-circuit voltage), is shown at Voc; in between is a voltage at which the power (ie current x voltage = IxV) is highest (that is, at the maximum power point mpp): this point is shown at (Vmp,Imp).

Under ideal conditions, the PV cell is operated at the maximum power point. At this operating point a maximum electrical power is extracted from the cell. Since solar energy incident on the cell, which is neither reflected nor converted into electrical energy, is dissipated as thermal energy, or heat, the maximum power point also corresponds to the operating point at which the thermal energy dissipated as heat, is a minimum.

To a first approximation, the irradiation current I($\phi$) is directly proportional to the incident solar irradiation on the cell. This is shown in figure 2, which depicts the IV characteristic of a PV cell under various irradiation conditions ranging from a relatively low irradiance at curve 210 through to a relatively high irradiance at curve 220. The open circuit voltage of the cell also increases with increasing illumination, and it may be shown from equation 1 that the increase in Voc is generally or approximately logarithmic. As a result of the proportionality of the illumination current with irradiance, and the logarithmic increase in open circuit voltage with increasing irradiance, the increase in maximum power that can be extracted from the cell increasing irradiance is slightly more than proportional. That is to say the efficiency of the cell is generally higher at a higher irradiance level, assuming constant temperature.

Turning now to figure 3, this shows the variation of the IV characteristic of a solar cell with operating temperature. The figure shows two operating curves 310 and 320 corresponding to a relatively lower and relatively higher temperature respectively. At the higher temperature, the short-circuit current Isc slightly higher, (due to band gap narrowing, as will be familiar to the skilled person) relative to that at the lower temperature. However the open circuit voltage Voc decreases relative to its value at the lower temperature, due to the temperature dependence of the diode characteristic shown above in figure 1. The voltage decrease is relatively more than the current increase, resulting in a significant reduction in operating power at higher temperature. It is therefore important to maintain an operating PV cell at a low temperature. This is particularly important for a concentrator PV cell with a relatively high level of irradiance. Thus the thermal design of a concentrator PV module is important, as will be discussed further hereinunder.

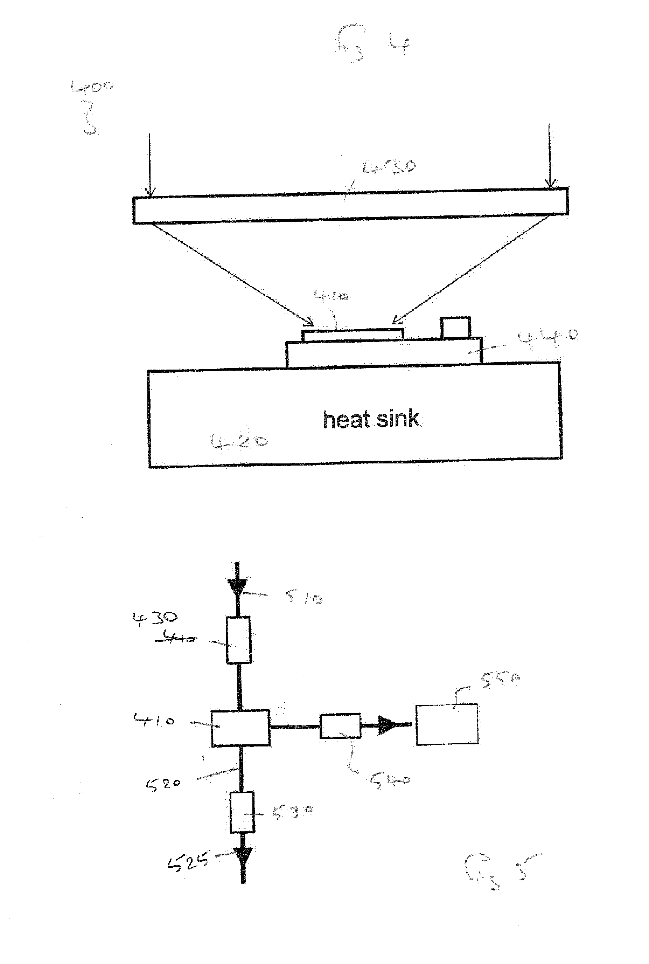

Figure 4 shows a schematic of a concentrator PV module 400. The PV module comprises a PV cell 410, onto which light may be concentrated either by refraction, such as using a lens 430 420 as shown, or by reflection using mirrors. An example of an arrangement of mirrors is a Cassegrain solar concentrator, which concentrates light in two dimensions; alternatively, a trough-shaped concentrator concentrating light in one dimension may be used.

The PV cell 410 is thermally connected to a heatsink 420 430 by a thermal path. The thermal path may comprise a mounting plate 440 as shown. Alternatively, the PV cell may be directly connected to the heatsink. In the latter case, the thermal path generally includes thermal grease, in order to ensure a good contact between the PV cell and the heat sink. The thermal grease may be replaced by an adhesive material. In order to ensure a high thermal conductance, the adhesive material may comprise metal particles embedded in, or loading, a matrix material.

A temperature sensor may be included in the module. However, a PV module operated according to some embodiments may not require a temperature sensor.

Figure 5 is a schematic of the power flow in a concentrator PV cell. The figure shows optical energy 510 directed onto a PV cell 410, through or by reflective or refractive optics 430. The PV cell is operational to convert some of the optical energy to electrical energy 520; some of this electrical energy is converted back to thermal energy in electrical series resistance, shown as resistor 530. Electrical series resistance arises due to, for instance, non-zero electrical resistance in the semiconductor of the PV cell itself, its electrical contacts, and the wired electrical connections to the PV cell. Apart from any of the incident optical energy which is reflected, the remainder is converted into heat energy. This heat energy flows through a thermal path 540 to a heat sink. The steady-state temperature of the cell is then determined by the non-reflected incident optical energy (which depends on the efficiency of the optical concentrator), the conversion efficiency of optical energy into electrical energy by the PV cell, resistor 530, the thermal resistance of thermal path 540, and the temperature and heat-dissipating capacity of the heat-sink 550.

Embodiments of the present invention may be used to test the thermal resistance of the thermal path 540. An absolute value of the thermal resistance may not be required to be known. However, a relative measurement (such as a comparison between the thermal resistance of two neighbouring PV cells, or a change in a thermal resistance of a single PV cell over time), may provide useful information. Such information may be used, for instance, to detect possible delamination of a PV cell from a module. Another use to which the information may be put is to predict or monitor for an abnormally high operating temperature of a cell. This is because the higher the thermal resistance of path 540, the higher will be the temperature of PV cell 410. In practice, an increase in the thermal resistance results in a higher operating temperature, which reduces the cell's conversion efficiency, thereby increasing its temperature even further. It is possible that a complete thermal runaway may occur, resulting in complete failure of the cell, or still worse a fire occurring at the site of the cell.

If the PV cell is operated at another operating point than maximum power point, that is to say at a difference operating voltage and resulting output current, a smaller amount of energy is converted into electrical power, and correspondingly larger amount of energy is dissipated as heat. Thus, deviating from the maximum power point results in an increased thermal loading on the PV cell.

There are other ways of changing the thermal loading on the PV cell. It is ready known from Muller (2011) mentioned above, to shutter the incident radiation on a PV cell - which results in a decrease in the thermal loading. Another known alternative would be to redirect the optics of the PV system so that the incident radiation is not directly focused on, or concentrated on, the cell. However, neither of these alternatives are particularly practical or viable in operational systems.

Another way of changing the thermal loading on a PV cell is to inject additional current through the cell. Under normal, irradiated, conditions this would have the result of changing the operating point of the solar cell, to a different position on the IV curve shown in figure 1, so that the cell is operating at another operating points than the maximum power, as discussed above. However, such a current injection could also be applied when the cell is not irradiated, that is to say when current source $I(\phi)$ is zero. In such a dark condition, the solar cell operates as a simple diode, and due to the nonzero effective resistance of the diode, injecting current into it will result in thermal dissipation, thereby changing the thermal loading voting on the cell.

In methods according to embodiments, a transient is produced in the thermal loading on the PV cell; this transient in the thermal loading introduces a perturbation from the steady-state temperature of the PV cell. This perturbation is then observed, and in particular a parameter indicative of a rate of change of temperature of the concentrator PV cell caused by the transient is determined. A parameter is then determined indicative of a thermal conductance of the thermal path, based on the parameter indicative of a rate of change of temperature of the concentrator PV cell.

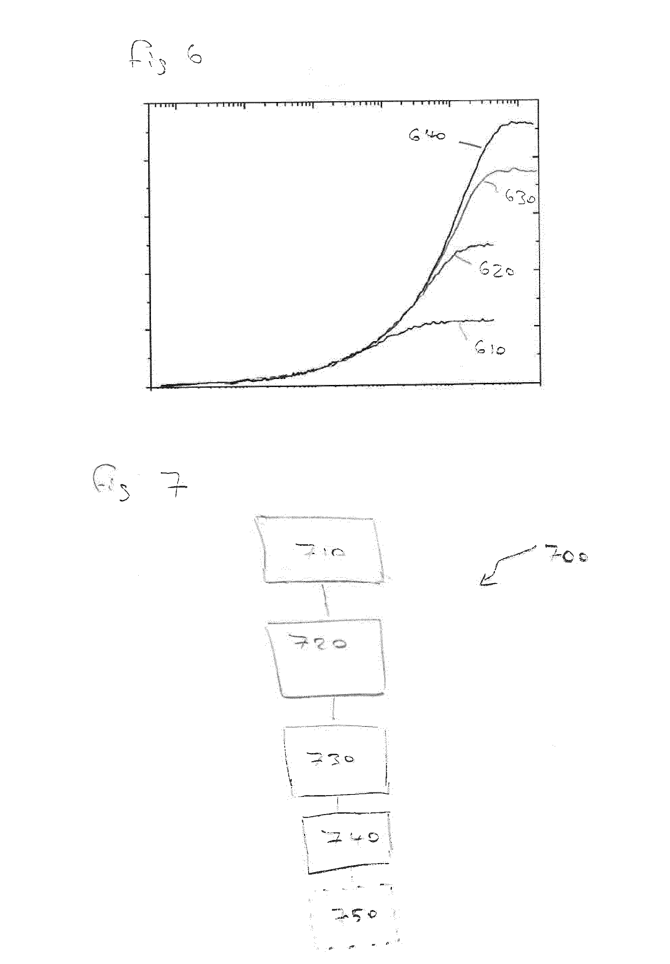

Figure 7 shows a flow-chart 700 illustrating methods according to such embodiments. Initially, at 710, the PV cell has a certain temperature T. The concentrator PV cell may be in an operational state - that is to say irradiated - or may be non-operational - for example it may be in the dark, or it may be disconnected from a supply such that it is operating at an open circuit voted Voc. At 720 a transient is introduced to the thermal loading on the cell. Whilst the transient is occurring the temperature of the cell will start to change, and during the transient a parameter associated with a change of temperature of the concentrator PV cell caused by the transient is determined, at 730. From this parameter, a parameter indicative of a thermal conductance of the thermal path, is determined at 740. Application of the transient may then be ended, as is shown at 750.

In other embodiments, a transient is applied at 710 for a limited period, and only after the transient has ended, the process moves to step 720. In such embodiments step 750 is plainly not required. In such embodiments, further, the parameter associated with a change of temperature of the concentrator cell is determined whilst the temperature is reverting to its original level - that is to say prior to the application of the transient.

Example embodiments, in which the transient is applied in different ways, will now be considered in more detail:

Consider first a transient which is produced by injecting a current through a cell which is in darkness, for instance at night time. Such a transient will increase the thermal loading on the cell, and thus the temperature of the cell will increase. This is shown in figure 6, for four different values of thermal resistance of the thermal path between the PV cell and the heatsink. The figure shows the temperature of a PV cell, linearly on the Y-axis or ordinate, over time which is plotted logarithmically on the X-axis or abscissa. The change in temperature over time is shown at curve 610 for a relatively low thermal resistance, for higher thermal resistances at curves 620 and 630 respectively, and for a relatively highest thermal resistance at curve 640. The figure shows that, in each case, the temperature of the cell stabilises after time. It further shows that for the relatively lowest thermal resistance, the change in temperature is least and for the relatively highest current the change in temperature is greatest. Moreover, the figure also shows that the time taken until the temperature reaches an equilibrium at the higher value is greatest for the relatively highest thermal resistance thermal resistance and least for the relatively lowest thermal resistance thermal resistance.

Thus, by increasing the thermal loading on the cell, each of the change of temperature of the cell, and the time taken until the temperature stabilises at a new value, may be used to provide an indication of the thermal resistance between the cell and the heatsink. Conversely, after the end of the transient, that is to say in this case after switching off the current injected through the cell in darkness, its temperature reverts towards its initial temperature prior to the transient, and the change in temperature or the time required for this reversion to occur change may, similarly, be used to provide an indication of the thermal resistance between the cell and heatsink.

Various methods, which will be immediately apparent to the skilled person, may be used in order to provide an indication of the time taken for the temperature to settle at the new higher equilibrium during a transient in which the thermal loading is increased (or lower temperature during a transient in which the thermal loading is decreased, as the case may be. For instance, the rate of change of temperature may be monitored, and since this will generally increased to a maximum value and then decrease, the rate of change may be measured and is the temperature treated to be settled at the new equilibrium value once the rate of change falls below a predetermined value. Alternatively the second differential of temperature- that is to say the rate of change of the rate of change of temperature - may be monitored, and the moment at which the second differential becomes negative may be used to provide an indicative of the time which will be required for the temperature to eventually settle.

Consider next a transient which is produced by injecting heat into a cell which is in an operational state, for instance during daytime. Such a transient may be produced by modulating the operating point of the cell around its maximum power point. As discussed above, a deviation away from the maximum power point reduces the conversion efficiency of the cell, such that less energy is extracted electrically, and more is converted into heat. Increasing the thermal loading on the cell in this manner results in an similar situation to that just discussed, and so, once again, either the change of temperature of the cell or the rate of change of temperature may be used to provide an indication of the thermal resistance between the cell and the heatsink.

A further method of producing a transient is by shuttering the cell, as is known from for instance Muller (2011) described above. However, in contrast to Muller, either the temperature or the rate of change of temperature may be monitored, and the information may be used not to determine an absolute temperature, but rather to evaluate the dynamic thermal properties of the system, and in particular a thermal resistance. Moreover, this embodiment is not preferred since in practice it is not straightforward to shutter the cell. Shuttering the cell typically requires a mechanical action which is relatively slow, and equipment to enable the shuttering, which is relatively expensive. The provision of transient by electrical means as described in the early embodiments does not, in general, require such slow or expensive equipment.

If a rate of change in temperature is utilised, it is not necessary, in embodiments, for the transient to last for a time sufficient to enable the system to stabilise. Thus the measurement and the assessment may be made in a relatively short period of time, and if this is done during an operational period of the concentrator PV system, the loss of energy may be low or even negligible. Even if a change in temperature is used, rather than a rate of change of temperature, it is still not necessary for the system to stabilise and similarly the measurements and the assessment may be made in a relatively short period of time such that if it is done during operational period of concentrator PV systems the loss of energy may be negligible.

Determination of the change of temperature, or rate of change of temperature, may be made using a conventional temperature sensor such as a thermocouple or a tempted and resistor or other sensor which will be familiar to the skilled person.

Alternatively, determination of the change of temperature or the rate of change of temperature, may be made using a "senseless" sensing technique developed by the Applicant and disclosed for instance in international patent application publication number WO 2009/095853-A2, in relation primarily to an LED. In this technique there is provided a method of estimating the junction temperature of a light emitting diode, comprising: driving a forward bias current through the diode, the current comprising a square wave which toggles between high and low current values, the high current value comprising an LED operation current, and the low current comprising a non-zero measurement current; sampling the forward bias voltage drop, and determining the forward bias voltage drop at the measurement current; and deriving the temperature from the determined forward bias voltage drop. This method uses measurement current pulses for driving the LED with a low non-zero current. This allows the LED temperature measurement to take place while the LED is in operation. The low measurement current pulses are alternated (in a square wave pulse sequence) with high current LED drive pulses. The low measurement current pulses may have a current less than or equal to 1mA. The technique is not limited to an LED and may be used for instance to evaluate the temperature of a solar cell, since it is based on the underlying diode characteristic of the LED - or in this case PV cell - which diodes characteristic may be modelled using equation (0) above.

In simple terms, by measuring the current and voltage of the device - in this case a solar cell - at two operating points, equation 0 may be used to eliminate the unknown variable $I_o$, and deduce a value for q/nkT. The electronic charge q and Boltzmann's constant k are known constants, resulting in an estimated value for nT, where T is the temperature of the device and n is the diode's ideality factor. For the diode operating in the regime where the injection currents dominates, n may be approximated as n=1, and thus an estimation of the absolute temperature of the device may be made.

As the skilled person will recognise, equation (1) includes the effect of series resistance Rs. In WO 2009/095853-A2, these effects may be reduced or practically eliminated by selecting a sufficiently low value of the current for the relatively low current. However, in embodiments in which a "delta converter" is used, this may not be practicable. It is noted that in embodiments the absolute temperature may not be required, but rather a relative temperature may be sufficient to determine a parameter indicative of the thermal conductance of the thermal path. This may relax the requirement that the relatively low current be a sufficiently low so as to be able to neglect series resistance, thereby enabling the use of delta convertors. In the extreme, any value which is measurably lower that the relatively high current may be used for the relatively low current. In other embodiments, the operating voltage may be determined at three different currents, each of which are high enough to be achieved using a delta convertor. The three measurements may then be used to solve for - or even directly to eliminate from the calculation - the effects of series resistance.

In embodiments, the above described "senseless sensing" method of providing an indication of the temperature of the PV cell may be combined with a so-called "delta converter". Such a delta converter typically provides a DC-to-DC conversion function of the power output from the cell in order to balance the current between individual cells or groups of cells in the same series connected string. The concept is disclosed in Applicant's international patent application, publication number WO2010/128363. As described therein, the delta converter acts as a supplementary power unit connected in parallel with each of two PV cells (or groups of cells), in order to exchange power from the first PV cell (or group of PV cells) to the other, series connected, PV cell (or group of PV cells). It operates by using known DC to DC conversion technique, which involve pulse modulating the current. Since pulse modulation is required, two different current levels (corresponding to the high value of the pulse and the low value of the pulse - which in this case is non-zero), are required, and thus this technique may be suitable for combination with the senseless sensing technique described just above.

The embodiments above have been described with reference to concentrator PV modules and concentrator PV cells. Other embodiments relate to non-concentrator PV modules and non-concentrator PV cells; similar methods may be applied. Although non-concentrator PV cells generally operate at lower temperatures, and have a lower thermal flux, it may still be beneficial to characterise their thermal properties, for instance to monitor for thermal degradation, or delamination as described above in relation to concentrator PV cells and modules.

From reading the present disclosure, other variations and modifications will be apparent to the skilled person. Such variations and modifications may involve equivalent and other features which are already known in the art of concentrator PV systems and modes, and which may be used instead of, or in addition to, features already described herein. The skilled person will be immediately familiar with the inverse relationship between thermal conductance and thermal resistance.

It will be appreciated that as used in here-in, a "transient", may last for a fraction of a second up to several tens of seconds, in particular a transient may last for between 0.01 second and 100 seconds, or between 0.1 seconds and 10 seconds. In the context of a concentrator PV module, where changes typically occur over hours, parts of a second up to several tens of seconds represents a relatively short time frame.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived there from.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of characterising a PV module comprising a PV cell having a thermal loading thereon, a heat sink, and a thermal connector providing a thermal path between the PV cell and the heat-sink,
the method comprising:

   producing a transient in the thermal loading;
   determining a parameter associated with a change of temperature of the PV cell caused by the transient; and
   determining a parameter indicative of a thermal conductance of the thermal path, based on the parameter associated with a change of temperature of the PV cell.

2. The method of claim 1 wherein the PV module is a concentrator PV module and the PV cell is a concentrator PV cell.

3. The method of claim 1, wherein the parameter associated with a change of temperature of the PV cell is one of a change of temperature of the PV cell and indicative of the time for the PV cell to reach an equilibrium temperature.

4. The method of any preceding claim, wherein the transient is produced by altering a level of solar irradiance on the PV cell.

5. The method of any of claims 1 to 3, wherein the transient is produced by altering the electrical operating conditions of the PV cell.

6. The method of claim 5, wherein the transient is produced by injecting current into the PV cell.

7. The method of any preceding claim, wherein a pulse modulation between a relatively high current value and a relatively low current value is used to determine the parameter associated with a change of temperature of the PV cell caused by the transient.

8. The method of claim 7, wherein the pulse modulation is provided by a switched mode power converter, wherein the switched mode power converter is further operable to control an operating voltage of the PV cell.

9. The method of claim 6 wherein the current is injected into the PV cell by a DC-DC converter, or of claim 8 when dependent on claim 6 wherein the current is injected into the PV cell by the switched mode power converter.

10. An arrangement for characterising a PV module comprising a PV cell having a thermal loading thereon, a heat sink, and a thermal connector providing a thermal path between the PV cell and the heat-sink, the arrangement comprising:

a transient source configured to produce a transient in the thermal loading;
a first determining unit configured to determine a parameter associated with a change of temperature of the PV cell caused by the transient;
and
a second determining unit in communication with the first determining unit and configured to determine a parameter indicative of a thermal conductance of the thermal path, based on the parameter associated with a change of temperature of the PV cell.

11. An arrangement according to claim 10, wherein the parameter associated with a change of temperature of the PV cell is a change of temperature of the PV cell, or is indicative of the time for the PV cell to reach an equilibrium temperature.

12. An arrangement according to claim 10 or 11, wherein the transient source is operable to at least one of alter a level of solar irradiance on the PV cell, alter the electrical operating conditions of the PV cell, and inject current into the PV cell.

13. An arrangement according to any of claims 10 to 12, further comprising a switched mode power converter configured to inject the current into the PV cell.

14. An arrangement to according to claim 13, wherein the switched mode power converter is configured to provide a pulse modulation between of a relatively high current value and a relatively low current value to determine the parameter associated with a change of temperature of the PV cell caused by the transient.

15. A photovoltaic system comprising a PV module and an arrangement as claimed in any of claims 10 to 14.

heat sink

Fig 6

640

630

620

610

Fig 7

710

720

730

740

750

700

| | Europäisches Patentamt / European Patent Office / Office européen des brevets | **EUROPEAN SEARCH REPORT** | Application Number<br>EP 12 19 8919 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/241549 A1 (WOOTTON GERALD R [CA]) 6 October 2011 (2011-10-06) * paragraphs [0015] - [0016], [0038], [0040] - [0042], [0143], [0171], [0176], [0183], [0186], [0194] - [0199]; figures 1,13a-b23, * | 1-15 | INV.<br>G01R31/26<br>F21S8/00 |
| X | US 2010/046575 A1 (HEBERT PETER H [US] ET AL) 25 February 2010 (2010-02-25) * abstract; figures 1-3 * * paragraphs [0007] - [0008], [0012], [0016], [0025] - [0031], [0042], [0043], [0047] * | 1-15 | |
| X | TINA G M ET AL: "Experimental verification of thermal behaviour of photovoltaic modules", ELECTROTECHNICAL CONFERENCE, 2008. MELECON 2008. THE 14TH IEEE MEDITERRANEAN, IEEE, PISCATAWAY, NJ, USA, 5 May 2008 (2008-05-05), pages 579-584, XP031316416, ISBN: 978-1-4244-1632-5 * the whole document * | 1-15 | |
| | | | TECHNICAL FIELDS SEARCHED (IPC)<br>G01R<br>F21S |
| X | VASS-VARNAI A ET AL: "Application of thermal transient testing for solar cell characterization", SEMICONDUCTOR THERMAL MEASUREMENT AND MANAGEMENT SYMPOSIUM (SEMI-THERM), 2012 28TH ANNUAL IEEE, IEEE, 18 March 2012 (2012-03-18), pages 162-168, XP032170738, DOI: 10.1109/STHERM.2012.6188844 ISBN: 978-1-4673-1110-6 * the whole document * | 1-15 | |

The present search report has been drawn up for all claims

| Place of search | Date of completion of the search | Examiner |
|---|---|---|
| Berlin | 6 June 2013 | Binger, Bernard |

EPO FORM 1503 03.82 (P04C01)

**EP 2 746 793 A1**

## ANNEX TO THE EUROPEAN SEARCH REPORT
## ON EUROPEAN PATENT APPLICATION NO.

EP 12 19 8919

06-06-2013

| Patent document cited in search report | | Publication date | Patent family member(s) | | Publication date |
|---|---|---|---|---|---|
| US 2011241549 | A1 | 06-10-2011 | CA | 2794766 A1 | 06-10-2011 |
| | | | CN | 102918930 A | 06-02-2013 |
| | | | EP | 2554025 A1 | 06-02-2013 |
| | | | TW | 201214505 A | 01-04-2012 |
| | | | US | 2011241549 A1 | 06-10-2011 |
| | | | WO | 2011120172 A1 | 06-10-2011 |
| US 2010046575 | A1 | 25-02-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009095853 A2

- WO 2010128363 A

**Non-patent literature cited in the description**

- **MULLER et al.** Determining outdoor CPV cell temperature. *7th International conference on concentrating PV systems (CPV - 7), AIP conference proceedings,* 2011, vol. 1407, 1331-335